# EUROPEAN PATENT APPLICATION

(11) **EP 1 307 021 A2**
(43) Date of publication of application: **02.05.2003**
(21) Application number: 02079438.4
(22) Date of filing: 23.10.2002
(51) Int. Cl.: H04L 29/06, H04L 12/14

(54) **A method of controlling the amount of data transferred between a terminal and a server**

(30) Priority: 26.10.2001 GB 0125719
(71) Applicant: Roke Manor Research Limited, Romsey, Hampshire SO51 0ZN (GB)
(72) Inventor: Beesley, Richard Craig, Romsey, Hampshire SO51 7LE (GB)
(74) Representative: Condon, Neil

(57) **Abstract**

A system for controlling the amount data downloaded from a server to a terminal over a network. The terminal comprises a browser and a client proxy the function of which is to communicate to the web server requests for information on the size of text data and image data in web pages requested by the browser and to retrieve the text and images associated with the web pages provided that this would not cause certain user defined data download limits to be exceeded. The client proxy is arranged so that a user may select that it automatically performs a partial download of web page data if it determines that a complete download of the data would result in a user defined data limit being exceeded or if such a determination is made that the client proxy downloads no data at all.

## Description

This invention relates to a method of controlling the amount of data transferred between a terminal and a server.

Publicly accessible computer networks, the best known example of which is the Internet, are well known. Use of the internet is increasing rapidly and there are now many ways by which a user may gain access to the Internet. From home computers such as PCs or Macs, it is common for users to access the internet by using a fixed communication line such as an analogue telephone line or an Integrated Services Digital Network line to connect the computer to a server operated by an Internet Service Provider. As well as accessing the Internet by using fixed communication lines it is becoming increasingly common for users to access the Internet using wireless communication techniques. Nowadays the operators of many cellular communications networks provide the functionality that enables their customers to use their mobile phones to make a 'wireless' connection to the Internet.

To date, communication network operators have tended to charge customers for Internet usage according to the amount of time that the customer remains connected to the Internet through the network. Thus, the longer the customer remains connected, then the more that customer will be billed. Now however, the operators of both fixed line and wireless networks, are beginning to adopt a new Internet billing model in which a customer is billed according to the amount of data that they transmit and receive during an Internet session, rather than according to the length of time that the session lasts. In particular, it is envisaged that the operators of so called 2.5G (GPRS) mobile networks and the soon to be introduced 3G (UMTS) mobile networks will adopt this new Internet billing model.

With the introduction of this new Internet billing model, it will become more difficult for Internet users to exercise control over the financial costs of their Internet sessions. For example, during a typical Internet session a user will often wish to follow a link to a World Wide Web (WWW) page of data size that is unknown to the user. With the new billing model, downloading Web pages of unknown size may result in a user incurring financial costs that with hindsight that user would not have thought worth incurring.

The present invention aims to alleviate the above discussed problem.

According to the invention there is provided a method of controlling the amount of data transferred from a server to a terminal over a communications network, the method comprising: receiving as input at the terminal user preference data including a first data download limit for a first data type; transmitting from the terminal to the server a request for size information on a file of the first data type stored on the server; receiving at the terminal the requested size information; comparing the size information and the first data download limit; and if it is determined that the size of the file of the first data type is less than or equal to the first data download limit, transmitting a data download request from the terminal to the server for the file of the first data type to be downloaded to the terminal.

According to the invention there is also provided, a method of controlling the amount of data transferred from a server to a terminal over a network connection in a communications network, the method comprising: receiving as input at the terminal user preference data including a first data download limit for a first data type; transmitting a data download request from the terminal to the server for a file of the first data type stored on the server to be downloaded to the terminal; monitoring at the terminal the amount of file data received from the server over the network connection; and terminating the network connection in response to the amount of file data received at the terminal reaching the first data download limit.

According to the invention there is also provided, a method of controlling the amount of data transferred from a server to a terminal over a communications network, the method comprising: receiving as input at the terminal user preference data including a session data download limit; transmitting from the terminal to the server a request for size information on a data file stored on the server; receiving at the terminal the requested size information; using the size information to determine at the terminal whether downloading the file to the terminal would cause the session limit to be exceeded; and if it is determined that downloading the file to the terminal would not cause the session limit to be exceeded, transmitting a data download request for the file from the terminal to the server.

According to the invention there is also provided a method of controlling the amount of data from a file stored on a server terminal that is transferred from the server terminal to a user terminal over a communications network, the method comprising: determining that the total amount of data in the file is larger than a data download limit input at the user terminal; transmitting from the server terminal to the user terminal a part of the file, the part being equal to or less than in size than the data download limit.

Embodiments of the invention will now be illustrated, by way of example only, with reference to the accompanying drawings, in which:
Figure 1 illustrates a system embodying the invention;
Figure 2 illustrates a user terminal;
Figure 3 illustrates a block diagram showing processes present in the user terminal illustrated in Figure 2;
Figure 4 illustrates a block diagram of a web server;
Figure 5 illustrates a block diagram showing processes present in the web server illustrated in Figure 5;
Figure 6 illustrates the steps in a data download process;
Figure 7 illustrates the steps in another data download process;
Figure 8 illustrates the steps in yet another data download process;
Figure 9 illustrates a system embodying the invention;
Figure 10 illustrates another system embodying the invention.

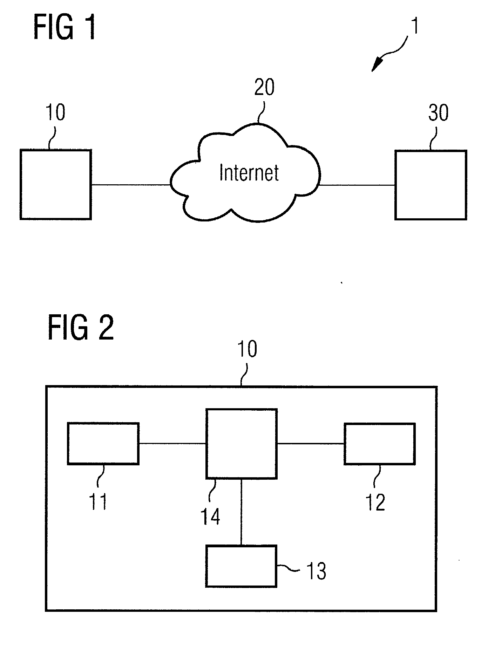

Referring now to Figure 1 there is illustrated a system 1 embodying the present invention. The system 1 comprises a client terminal 10 connected via the Internet 20 to a web server 30. The terms "client" and "server" in this embodiment are illustrative but not limiting to any particular architecture or functionality.

As illustrated in Figure 2, the client terminal 10 comprises a data input means 11, such as a keyboard, a VDU 12, a modem 13 and a computer 14 comprising a processor, mass storage such as a hard disk, and working storage such as RAM. For example, a Pentium (TM) based personal computer may be employed as the client terminal 10.

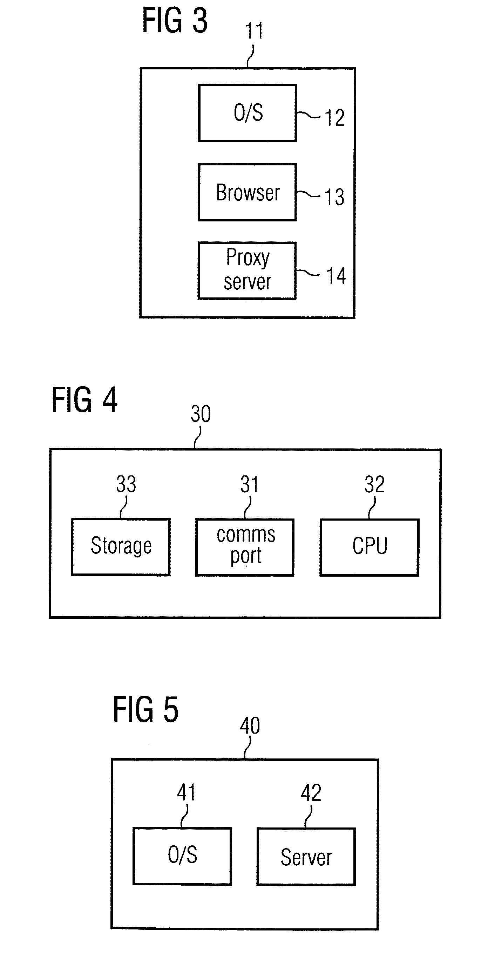

Referring to Figure 3, stored within the client terminal 10 (e.g. on the hard disk drive thereof) are programmes 11 comprising an operating system 12 (such as Windows (TM)), a browser 13 (such as Windows Explorer (TM) version 3) and a client proxy server 14 designed to operate with the browser 13. The function of the operating system 12 is conventional and will not be described further. The function of the browser 13 is to communicate requests to, and to receive data from, the web server 30 via the client proxy 14. As is well known, the browser 13 provides a graphical user interface (GUI) for displaying information and receiving input.

The function of the client proxy 14 is to communicate to the web server 30 requests for information on the size of text data and image data in web pages requested by the browser 13 and to retrieve the text and images associated with the web pages provided that this would not cause certain user defined data download limits to be exceeded. The client proxy 14 is arranged so that a user may select that it automatically performs a partial download of web page data if it determines that a complete download of the data would result in a user defined data limit being exceeded or if such a determination is made that the client proxy 14 downloads no data at all.

When a partial download of a web page is made, in response to further user input, the client proxy 14 may download the remainder of the web page without having to reload the entire web page.

Advantageously then, the client proxy 14 allows for control over the amount of data downloaded to the terminal 10 from the web server 30.

Preferably, the client proxy 14 is be implemented in software using a machine independent language such as Java or Per1.

Referring to Figure 4 the web server 30 comprises a communications port 31, a central processing unit 32 and a mass storage device 33.

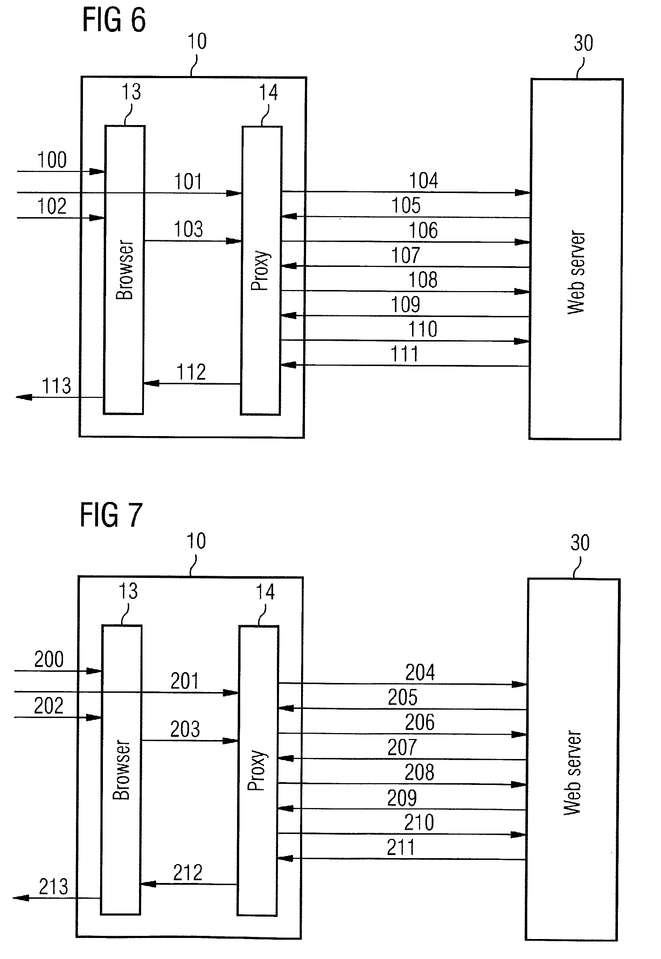

Referring to Figure 5 the server 30 comprises an operating program 40 comprising an operating system 41 such as Unix and a server program 42. The operating system is conventional and will not be described further.

The function of the server program 42 is to receive requests from the client proxy 14 for information on the size of web page hypertext documents stored on the web server 30 and also to receive from the client proxy 14 requests for information on the size of images or other multi-media files referred to in the Hypertext documents. The server programme 42 is arranged to send the requested information to the client proxy 14. At the client proxy's 14 request, the server programme 42 may supply to it a complete web page or only part of a complete web page. When the server programme 42 supplies the client proxy with only part of a web page, on further request from the client proxy 14 the server programme 42 may supply it with the remainder of the web page.

To allow the above described functionality, the web server 30 supports a suitably enhanced Hyptertext Transfer Protocol (HTTP).

There will now be described with reference to Figures 4 to 6 the steps involved in exemplary specific Internet processes performable in the system 1.

Referring first to Figure 6, in step 100, a user of the terminal 10 launches the web browser 13 and via the keyboard 11 (or any other suitable data in-put means) inputs to the terminal 10 a text limit value, an image limit value and a session limit value. The text limit value identifies to the client proxy 14 the maximum amount of text data associated with a web page that the user is willing to downloaded in any given single data download operation. Similarly, the image limit value identifies to the client proxy 14 the maximum amount of data representing an image or graphics in a web-page that the user is willing to downloaded in any single given download operation. The session limit value identifies to the client proxy 14 the maximum total amount of data that the user is willing to download during an Internet session.

As will be explained below, prior to downloading a particular web page from the web server 30, the client proxy 14 is arranged to request information from the web server 30 that will allow the client proxy 14 to determine whether the downloading of the web-page would result in any of the above mentioned limits being exceeded. Thus, in step 101, the user specifies what the client proxy 14 is to do in the event that such a determination is made. The user may select either a 'partial retrieval' option or a 'no retrieval' option. If the 'partial retrieval' option is selected, then the client proxy 14 will automatically partially download the web page to the extent that the user input limits may be reached but not exceeded. If the 'no retrieval' option is selected, then the client proxy 14 will not download any of the page without further prompting from the user. The user may make this selection, for example, using a drop down menu displayed on the VDU in a dialog box or as a command line function.

The discussion with respect to Figure 6, relates to a session in which the downloading of a web page would not cause any of the user input limits to be exceeded and so for this discussion, the user selection in step 101 is not important.

In step 102, by specifying to the web browser 13 a Uniform Resource Locator (URL), the user selects a web page for downloading from the web server 30. A request for the selected web page is passed from the web browser 13 to the client proxy 14, step 103. In step 104, the client proxy 14 sends to the web server 30 a request for infromation detailing the size of the Hypertext Markup language (HTML) document that defines the requested web page.

As is known to those skilled in the art, HTML is a markup language that is used to construct hypertextual web pages. Hypertext documents contain the commands that instruct a web browser on how to format and display the text, images and other elements that make up the web page defined by the document. Such documents may also contain commands that a browser interprets and then displays as links to other web pages or Internet sites. A HTML document contains all of the text that is to be displayed in the web page that it defines, but it does not itself contain any image, sound or other multimedia files that are included in the web page. Instead, the document contains HTML references (hyperlinks) to those files, which a browser (or a proxy acting on behalf of a browser) may use to request the files from the server on which they are stored, in order to display them with the web page.

In step 105, the web server 30 returns to the client proxy 14 information detailing the size of the HTML document. The client proxy 14 then compares the size of the HTML document to the text limit value previously input by the user in step 100 and also determines if the HTML document can be downloaded without causing the session limit to be exceeded. In this example, the size of the HTML document is less than or equal to the text limit value and can also be downloaded without causing the session limit to be exceeded and so in step 106, the client proxy 14 sends a request to the web server 30 for all of the HTML document to be downloaded, step 106. In step 107, the requested HTML document is received at the client proxy 14.

The client proxy 14 then parses the HTML document in order to identify if the document includes any HTML references to images that are included in the web page. In this example, for simplicity of discussion, the client proxy 14 determines that the web page includes one image and at step 108, the client proxy 14 sends a request to the web server 30 for information detailing the size of that image. In step 109 the web server sends to the client proxy the information detailing the size of the image. The client proxy 14 then compares the image size to the image limit previously input by the user at step 100, and also determines whether or not downloading the image would cause the session limit to be exceeded. In this example, the image size is less than the image limit and downloading the image would not cause the session limit to be exceeded and so in step 110 the client proxy 14 sends a request to the web server 30 for the image to be downloaded.

In step 111, the client proxy 14 receives the image from the web server 30 and in step 112 returns the complete web page to the browser 13. In a conventional fashion, the web browser 13 then displays the web page to the user, step 113.

Figure 7 illustrates another exemplary Internet session that is in accordance with an embodiment of the invention. In this session, in step 200, a user of the terminal 10 launches the web browser 13 and as per step 100 in the session described with respect to Figure 4, inputs to the terminal 10 a text limit value, an image limit value and a session limit value.

In step 201, the user selects the 'partial retrieval' option, should the client proxy 14 determine that a web-page download would cause a limit to be exceeded. In step 202, the user specifies to the browser 13 a URL relating to a web page stored on the web server 30, and in step 203 a request for the download of the selected web page is passed from the web browser 13 to the client proxy 14.

In step 204, the client proxy 14 sends to the web server 30 a request for the size of the HTML document that defines the requested web page. In step 205, the web server 30 returns to the client proxy 14 information detailing the size of the HTML document. Next, the client proxy 14 compares the size of the HTML document to the text limit value previously input by the user in step 200 also determines whether or not downloading the HTML document would cause the session limit to be exceeded. In this example, the size of the HTML document is more than the text limit value but downloading the HTML document would not cause the session limit to be exceeded and so in step 206, the client proxy 14 sends a request to the web server 30 for a partial download of the HTML document, up to the text limit value. The web-server 30 retrieves a portion of the HTML document that is equal in size to the text limit value and transmits the partial document for reception at the client proxy 14, step 207.

It is to be understood that if the client proxy 14 had determined that downloading the HTML document would cause the session limit to be exceeded but not the text limit or alternatively the session limit to be exceeded before the text limit was exceeded then the client proxy would request and subsequently receive from the web-server 30 a portion of the HTML document sufficient to take the total amount of data received during the session up to the session limit.

Preferably, the web - server 30 retrieves the partially downloaded HTML document such that the partial document has the same beginning as the full HTML document but ends at the point in the full document where the text limit value is reached. But this need not be the case, and the web-server 30 could retrieve any portion of the full HTML document that was equal to the text limit value in size.

Next, the client proxy 14 parses the partial HTML document in order to identify whether the partial document includes any references to images that are included in the web page. In this example, the client proxy determines that there is a reference to one image and so at step 208, the client proxy 14 sends a request to the web server 30 for information on the size of that image. In step 209 the web server 30 sends to the client proxy 14 the information on the size of the image. The client proxy 14 then compares the image size to the image limit previously input by the user and also determines whether or not downloading the image would exceed the session limit.

In this example, the image size is more than the image limit and it is determined that downloading the image would not cause the session limit to be exceeded and so in step 210 the client proxy 14 sends a request to the web server 30 for a part of the image to be downloaded, up to the image limit. In step 211 the web-server 30 retrieves a portion of the image that is equal in size to the image limit and transmits the partial image for reception at the client proxy 14.

It is to be understood that if the client proxy 14 had determined that downloading the image would cause the session limit to be exceeded but not the image limit or alternatively the session limit to be exceeded before the image limit was exceeded then the client proxy would request and subsequently receive from the web-server 30 a portion of the image sufficient to take the total amount of data received during the session up to the session limit.

At this point, preferably, the client proxy 14 parses the received partial HTML document and if necessary modifies it in order to improve the quality of the web page that is to be displayed to the user. For example, the client proxy 14 may add to the HTML document any closing <tags> that have clearly been omitted from the document as a result of the partial download. The client proxy may also process the partial image in order to improve its quality.

Advantageously, the client proxy 14 is also arranged to generate and insert into the received partial HTML document new HTML text which when displayed to the user will inform the user of the cost of downloading the remainder of the HTML document and the remainder of the image needed to complete the web page.

At this point, the client proxy 14 also inserts into the partial HTML document HTML commands for generating links onto which the user can simply click to request the downloading of the remaining text data and image data. Thus at step 212, the modified HTML document and image data is passed to the web browser 13 which then at step 213, displays to the user a modified web page comprising the partial text, partial image, the cost details of downloading the remainder of the HTML text and image data together with links on which the user can click to perform these downloads.

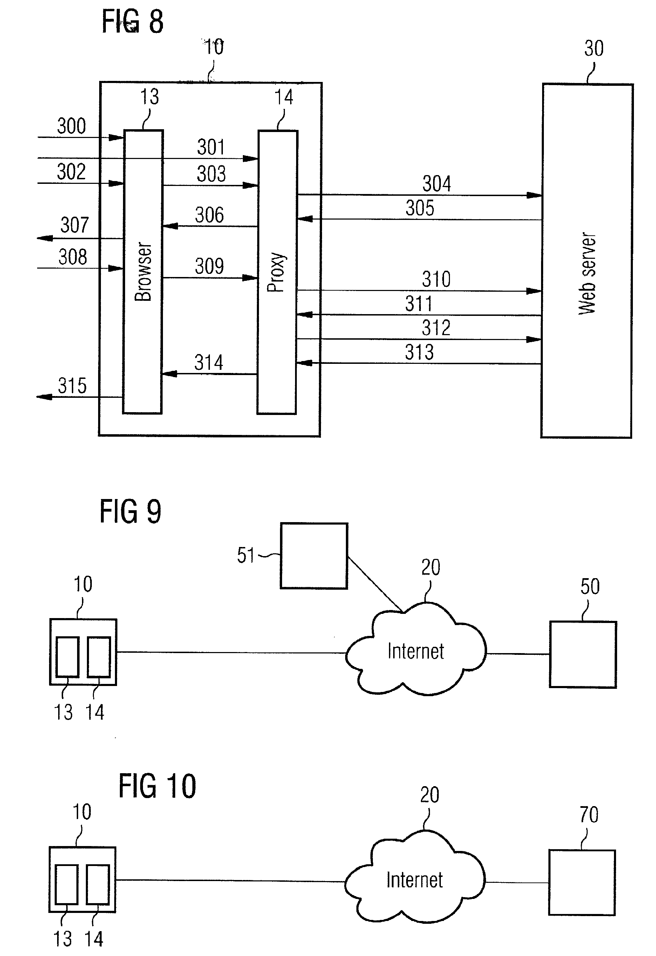

Figure 8 illustrates further steps in an exemplary Internet session that is in accordance with an embodiment of the invention. In step 300, a user of the terminal 10 launches the web browser 13 and as per step 100 in the session described above with respect to Figure 6, inputs to the terminal 10 a text limit value, an image limit value and a session limit value. In this example, in step 301, the user selects the 'no retrieval' option.

In step 302, the user specifies to the web-browser 13 a URL relating to a web page stored on the web server 30, and in step 303 a request for the download of the selected web page is passed from the web browser 13 to the client proxy 14. In step 304, the client proxy 14 sends to the web server 30 a request for information detailing the size of the HTML document that defines the requested web page. In step 305, the web server 30 returns to the client proxy 14 the information detailing the size of the HTML document. Again, the client proxy 14 then compares the size of the HTML document against the text limit value previously input by the user. As in the example described with respect to Figure 7, the size of the HTML document is more than the user input text limit value and/or the client proxy 14 determines that downloading the HTML document would cause the session limit to be exceeded.. In this example, since at step 302 the user selected the 'don't retrieve' option, the client proxy 14 does not request a partial download of the HTML document. Instead, the client proxy 14 is arranged to generate the HTML for a new information web page which information web page includes the cost details for downloading the entire HTML document and also a clickable link to enable the user to download the HTML document.

In step 306 the information page is passed to the web browser 13 which then displays the information web page to the user, step 307. Having considered the costs involved in downloading the HTML document the user can select to do so by clicking on the link in the information web page, step 308, causing the web-browser 13 to send a re-request for the HTML document to the client proxy 14, step 309, which in turn requests the HTML document from the web server 30, step,310.

At step 311, the client proxy 14 receives the requested HTML document from the web server 30 and then parses the HTML in order to identify if the web page includes any images. In this example, the client proxy 14 determines that the page includes one image and so at step 312, the client proxy 14 sends a request to the web server for the size of that image. In step 313 the web server 30 sends to the client proxy 14 the size of the image. The client proxy 14 compares the image size to the image limit previously input by the user and also determines whether or not downloading the image would exceed the session limit.

In this example, the image size is more than the image limit and/or the client proxy 14 determines that downloading the image would cause the session limit to be exceeded. In these circumstances, the client proxy 14 is arranged to generate and insert into the received HTML document, new HTML text that details the cost to the user of downloading the entire image data. The client proxy 14 also inserts new HTML text to generate a link on which the user can simply click to request the download of the image data. Thus at step 314, the web page is passed to the web browser 13 which then at step 315, displays the web page with its full text content, but with its image replaced with the cost details and a download link.

In the above described examples, each downloaded HTML document contained a reference to only one image file. It will be appreciated that the client proxy 14 may also deal with downloaded HTML documents that contain references to more than one image file. In such instances, the client proxy 14 will request from the web server 30 size information for each image in order to determine which of the multiple images exceed the image limit. Thus, when the user has selected the partial download option, for each of the images that it is determined that the size of the image is larger than the user input image limit, the client proxy 14 sends a request to the web server 30 for part of that image to be downloaded, the part equalling the user input image limit in size. Images determined by the client proxy 14 not be larger than the image limit will be downloaded in full. It will also be appreciated that the client proxy 14 will co-ordinate the downloading of such multiple images in such a manner that the session data limit is not exceeded.

When the user has selected the 'no retrieval' option, each image that the client proxy 14 determines does not exceed the image limit in size will be downloaded to the terminal 10 in full. Each image that the client proxy 14 determines is larger than the image limit will not be downloaded but instead the client proxy 14 is arranged to generate and insert into the received HTML document new HTML text that details the cost to the user of downloading the entire image. Preferably, the client proxy 14 also inserts new HTML text into the HTML document to generate links onto which the user can simply click to request the downloading of each image. Again, it should be appreciated that the client proxy 14 will co-ordinate the downloading of such multiple images in such a manner that the session data limit is not exceeded.

In the above described examples, the web-server 30 supports an extended HTTP which allows the client proxy 14 to determine the size of HTML documents and also the size of web images prior to downloading them and also to request and receive partial HTML documents and partial web images. In practice it is likely that the client proxy 14 will often request web pages from web servers which do not support such an extended HTTP and thus cannot support this extra functionality. As is illustrated in Figure 9, in such circumstances the extra functionality can still be provided if the client proxy 14 is connected to a web server 50 which does not support the extended HTTP via a further network proxy server 51 which does support the extended HTTP. The network proxy server 51 may for example be run by an Internet service provider. When the client proxy 14 requests a particular web page stored on the web server 50 the entire web page is first retrieved by the network proxy 51. The network proxy 51 then takes the non extended protocol associated with the web page and reformats it as an extended protocol. Thereafter, to retrieve the web page from the network proxy 51, the client proxy 14 is able to interact with the network proxy 51 in the exact same manner as its interaction with the web server 30 described above.

In Figure 10 there is illustrated a communication system comprising a terminal 10 which includes web - browser 13 and client proxy 14. The terminal 10, web -browser 13 and client proxy 14 are all similar to the corresponding features described above with respect to Figures 1 and 2. The terminal 10 is connected to a web server 70 via the Internet 20 using a standard TCP/IP connection.

As in the examples described above, user defined text, image and session data limits may be input by a user to the client proxy 14, but unlike in the examples described above, the web server 70 does not support the previously described enhanced HTTP functions. Since, the web server 70 does not support these enhanced HTTP functions the client proxy 14 cannot determine in advance of downloading a web page from the server 70, the size of that web page. Instead, in this example, the client proxy 14 is arranged to monitor incoming network traffic data and to close the data connection to the web server 70 when any of the user defined data limits are reached.

Thus for example, when receiving a HTML document from the server 70, the client proxy 14 will close the data connection with the server 70 when the amount of received HTML data reaches the user input text limit.

Having received a complete or partial HTML document from the web server 70, if the HTML document refers to an image file stored on the server 70 for display with the web page defined by the HTML document, the client proxy 14 may then request the downloading of that image from the web server 70 in the normal way. When receiving an image file from the server 70, the client proxy 14 is arranged to monitor the amount of received data from the file and if the amount of received data reaches the user input image limit to close the data connection to the server for that image file. This prevents any more data from the file being downloaded to the terminal 10. The client proxy 14 is also arranged to close the connection to the web server 70 if at any time during the downloading of data, the session data limit is reached.

Preferably, the client-proxy 14 makes use of the well known TCP congestion control mechanism to ensure that when a connection between the terminal 10 and server 70 is closed, there is no data on that connection left in the network.

Advantageously, in all the above examples, the client proxy 14 may also be arranged to generate data indicative to a user of the running financial cost of an Internet session and to display this information to the user. This will allow a user to keep track of the current total cost to the user for the data downloaded so far in an Internet session.

It will be appreciated that the client proxy 14 may also be configured to receive user input data limits for other types of data files associated with web pages to allow the downloading of these files to be controlled in any of the ways described above with respect to image files. Examples of such data files include sound files, video files, animation files or other types of multi media files or indeed more general data files such as plugins or downloadable software files that may be associated with web pages.

It will be appreciated that the present invention may also be used to control the amount of data being transferred from a web server to a terminal using types of protocol other than the HTTP, for example using the well known File Transfer Protocol (FTP).

Although in the above examples the terminal 10 is described as being a PC, it may also be any other type of suitable electronic terminal, for example a mobile phone or a personal digital assistant (PDA). For example, in one embodiment, the terminal 10 is a wireless terminal using communications protocols such as UMTs for communications over a wireless network which may provide a connection to the Internet.

The foregoing embodiments are merely examples of the invention and are not intended to be limiting, it being understood that many variants are possible within the scope of the invention. Protection is sought for any and all novel subject matter disclosed herein and combinations of such subject matter.

## Claims

1. A method of controlling the amount of data transferred from a server to a terminal over a communications network, the method comprising:
receiving as input at the terminal user preference data including a first data download limit for a first data type;
transmitting from the terminal to the server a request for size information on a file of the first data type stored on the server;
receiving at the terminal the requested size information;
comparing the size information and the first data download limit; and
if it is determined that the size of the file of the first data type is less than or equal to the first data download limit, transmitting a data download request from the terminal to the server for the file of the first data type to be downloaded to the terminal.

2. A method according to claim 1, the method comprising:
if it is determined that the size of the file is more than the first data download limit transmitting from the terminal to the server a data download request for part of the file of the first data type to be downloaded to the terminal, the part being no greater in size than the first data download limit.

3. A method according to claim 2, the method comprising:
receiving the data download request at the server;
transmitting the part of the file of the first data type to the terminal.

4. A method according to claim 1 or 2, wherein the user preference data includes a second data download limit for a second data type, the method further comprising:
receiving at the terminal a complete file or a partial file of the first data type;
identifying in the file of the first data type a reference to a file of the second data type that is stored on the server;
transmitting from the terminal to the server a second request for size information on the file of the second data type;
receiving at the terminal the second requested size information;
comparing the second size information and the second data download limit; and
if it is determined that the size of the file of the second data type is less than or equal to the second data download limit, transmitting a data download request to the server for the complete file of the second data type to be downloaded to the terminal.

5. A method according to claim 4, the method comprising:
if it is determined that the size of the file of the second data type is more than the second data download limit, transmitting from the terminal to the server a request for a download of part of the file of the second data type, the part being no greater in size than the second data download limited

6. A method according to claim 5, the method comprising:
receiving the request at the terminal;
transmitting the file of the second data type to the terminal.

7. A method according to any of claims 2 to 6, the method comprising:
receiving at the terminal the part of the file of the first data type and/or the part of the file of the second data type; and
generating price information indicative of the cost to a user of downloading from the server the remainder of the file of the first data type and/or the remainder of the file of the second data type;
displaying the price information to a user.

8. A method according to claim 7, the method comprising:
generating a link or links which a user can follow to download the remainder of the file of the first data type and/or the file of the second data type;
displaying the link or links to a user.

9. A method according to any of claims 2 to 8, the method comprising:
receiving at the terminal the part of the file of the first data type and/or the part of the file of the second data type; and
in response to user input, transmitting a request to the server for the downloading of the remainder of the file of the first data type and/or the remainder of the file of the second data type.

10. A method according to claim 9, the method comprising:
receiving the request at the server;
transmitting the remainder of the file to the terminal.

11. A method according to any of the claims 2 to 10, wherein the first data type is data representing text.

12. A method according to claim 11, wherein the first file is a hypertext document.

13. A method according to any of the claims 2 to 12 wherein the second data type is data representing an image.

14. A method according to claim 1, wherein the user preference data includes a session data download limit, the method further comprising:
using the size information to determine whether downloading the file of the first data type to the terminal would cause the session data download limit to be exceeded; and
sending the data download request from the terminal to the server only if it is determined that the size of the file is less than or equal to the first data download limit together with it being determined that downloading the file to the terminal will not cause the session data download limit to be exceeded.

15. A method according to claim 14, the method comprising:
if it is determined that the size of the file is less than the first data download limit but that downloading the file to the terminal would cause the session data download limit to be exceeded, transmitting from the terminal to the server, a data download request for part of the file of the first data type, the part being of such a size that downloading it to the terminal will not cause the session data download limit to be exceeded.

16. A method according to claim 1, the method further comprising:
in response to determining that the size of the first file is more than the first data download limit generating information indicative of this; and
displaying the information to a user.

17. A method according to claim 16 wherein the information includes price information indicative to the user of the cost of downloading from the server the file of the first data type.

18. A method according to claim 16 or 17, the method further comprising:
generating a link which a user can follow to download the file of the first data type; and
displaying the link to the user.

19. A method according to claim 16, 17 or 18, the method comprising:
in response to user input transmitting a request from the terminal to the server for the downloading of the file of the first data type; and
receiving at the terminal from the server the file of the first data type.

20. A method according to claim 19, wherein the user preference data comprises a second data download limit for a second data type, the method further comprising:
identifying in the file of the first data type received at the terminal from the server a reference to a file of the second data type stored on the server;
transmitting from the terminal to the server a second request for size information about the file of the second data type;
receiving at the terminal the second requested size information;
comparing the second size information and the second data download limit, and sending a data download request from the terminal to the server for the complete file of the second data type, if it is determined that the size of the file of the second data type is less than or equal to the second data download limited.

21. A method according to claim 20, wherein in response to determining that the size of the file of the second data type is greater than the second data download limit generating price information indicative to a user of the cost of downloading from the server the file of the second data type; and
displaying the price information to the user.

22. A method according to claim 21, the method further comprising:
generating a link which a user can follow to download the file of the second data type; and
displaying the link to the user.

23. A method according to any of the claims 17 to 22, wherein the first data type is data representing text.

24. A method according to claim 23, wherein the first file is a hypertext document.

25. A method according to any of the claims 20 to 24 wherein the second data type is data representing an image and the second file is an image file.

26. A method according to claim 1 wherein the user preference data includes a session download limit, the method further comprising:
using the size information to determine whether downloading the file of the first data type to the terminal would cause the session data download limit to be exceeded; and
if it is determined that downloading the file of the first data type to the terminal would cause the session data download limit to be exceeded, not transmitting the data download request to the server.

27. A method of controlling the amount of data transferred from a server to a terminal over a network connection in a communications network, the method comprising:
receiving as input at the terminal user preference data including a first data download limit for a first data type;
transmitting a data download request from the terminal to the server for a file of the first data type stored on the server to be downloaded to the terminal;
monitoring at the terminal the amount of file data received from the server over the network connection; and
terminating the network connection in response to the amount of file data received at the terminal reaching the first data download limit.

28. A method according to claim 27, wherein the user preference data includes a second data download limit for a second data type, the method further comprising:
receiving at the terminal a complete file or a partial file of the first data type transmitted from the server to the terminal in response to a download request;
identifying in the file of the first data type a reference to a file of the second data type that is stored on the server;
transmitting from the terminal to the server a data download request for the file of the second data type to be downloaded to the terminal;
monitoring at the terminal the amount of second file data received from the server over a network connection; and
terminating the network connection in response to the amount of second file data received at the terminal reaching the second data download limit.

29. A method according to claim 28, wherein the first file is a hypertext document.

30. A method according to claim 29 wherein the second data type is data representing an image and the second file is an image file referred to in the hypertext document.

31. A method of controlling the amount of data transferred from a server to a terminal over a communications network, the method comprising:
receiving as input at the terminal user preference data including a session data download limit;
transmitting from the terminal to the server a request for size information on a data file stored on the server;
receiving at the terminal the requested size information;
using the size information to determine at the terminal whether downloading the file to the terminal would cause the session limit to be exceeded; and
if it is determined that downloading the file to the terminal would not cause the session limit to be exceeded, transmitting a data download request for the file from the terminal to the server.

32. A method according to claim 31, the method comprising:
if it is determined that downloading the file to the terminal would cause the session limit to be exceeded, transmitting from the terminal to the server a data download request for part of the file of the first data type to be downloaded to the terminal, the part of the file being of such size that downloading it to the terminal will not cause the session limit to be exceeded.

33. A method according to claim 31, the method comprising:
if it is determined that downloading the file to the terminal would cause the session limit to be exceeded, generating data indicative of this and displaying the data to a user.

34. A method of controlling the amount of data from a file stored on a server terminal that is transferred from the server to a user terminal over a communications network, the method comprising:
determining that the total amount of data in the file is larger than a data download limit input at the user terminal;
transmitting from the server terminal to the user terminal a part of the file, the part being equal to or less than in size than the data download limit.

35. A computer programme for implementing the method of any preceding claim when executed on a processor.

36. A terminal or terminals configured to perform the method of any of claims 1 to 34.
